# EUROPEAN PATENT SPECIFICATION

(11) **EP 2 735 251 B1**
(45) Date of publication and mention of the grant of the patent: **25.04.2018**
(21) Application number: 12814472.2
(22) Date of filing: 02.07.2012
(51) Int. Cl.: D06N 7/00, B60N 3/04, A47G 27/02

(54) **MAT**
MATTE
TAPIS

(30) Priority: 18.07.2011 JP 2011157317; 29.09.2011 JP 2011213648
(43) Date of publication of application: 28.05.2014
(73) Proprietor: Daiwa Co., Ltd., Gifu 501-6064 (JP); Yachiyo Co., Ltd., Gifu 501-6096 (JP); Shouei Co., Ltd., Gifu 501-6096 (JP)
(72) Inventor: YAMADA, Kohei, Hashima-gun Gifu 501-6064 (JP); HORI, Mitsuo, Gifu-city Gifu 501-6132 (JP)
(74) Representative: Isarpatent
(86) International application number: PCT/JP2012/004276
(87) International publication number: WO 2013/011643

(56) References cited:
- WO-A1-00/07811
- DE-A1- 2 610 141
- JP-A- 2005 089 947
- JP-A- 2008 245 825
- JP-A- 2009 106 365
- US-A1- 2002 045 021
- US-A1- 2007 190 287
- US-B1- 6 463 963
- DATABASE WPI Week 201131 Thomson Scientific, London, GB; AN 2011-E38675 XP002736987, & JP 2011 083471 A (HACHIYO SHOJI YG) 28 April 2011 (2011-04-28)
- DATABASE WPI Week 201063 Thomson Scientific, London, GB; AN 2010-K82518 XP002736988, & JP 2010 187826 A (HACHIYO SHOJI YG) 2 September 2010 (2010-09-02)
- DATABASE WPI Week 200802 Thomson Scientific, London, GB; AN 2008-A24832 XP002736989, & JP 2007 297721 A (HACHIYO SHOJI YG) 15 November 2007 (2007-11-15)
- DATABASE WPI Week 200863 Thomson Scientific, London, GB; AN 2008-K58885 XP002736990, & JP 2008 054898 A (SUMINOE TEXTILE CO LTD) 13 March 2008 (2008-03-13)
- DATABASE WPI Week 200752 Thomson Scientific, London, GB; AN 2007-530340 XP002736991, & JP 2007 143802 A (SUMINOE TEXTILE CO LTD) 14 June 2007 (2007-06-14)
- DATABASE WPI Week 200511 Thomson Scientific, London, GB; AN 2005-069789 XP002742448, & JP 2005 007750 A (JSR CORP) 13 January 2005 (2005-01-13)
- DATABASE WPI Week 200511 Thomson Scientific, London, GB; AN 2005-094519 XP002742449, & JP 2005 002187 A (JSR CORP) 6 January 2005 (2005-01-06)
- DATABASE WPI Week 200426 Thomson Scientific, London, GB; AN 2004-273258 XP002742450, & JP 2004 018769 A (CLEANTECH JAPAN KK) 22 January 2004 (2004-01-22)
- DATABASE WPI Week 200766 Thomson Scientific, London, GB; AN 2007-704649 XP002742451, & JP 2007 215765 A (CLEANTECH JAPAN KK) 30 August 2007 (2007-08-30)
- DATABASE WPI Week 198910 Thomson Scientific, London, GB; AN 1989-074891 XP002742452, & JP S64 8118 B (MITSUBISHI PETROCHEMICAL CO LTD) 13 February 1989 (1989-02-13)
- DATABASE WPI Week 200013 Thomson Scientific, London, GB; AN 2000-143042 XP002742453, & JP 2000 008278 A (JAPAN POLYCHEM CORP) 11 January 2000 (2000-01-11)

## Description

### TECHNICAL FIELD

The present invention relates to a mat which is applied to carpets to be laid in rooms, chair mats for operations of computers, floor surface mats to be laid on entrances of rooms, door mats, floor surface mats to be laid in elevators or in front of opening/closing doors of elevator halls, or floor mats to be laid in cabins of automobiles, trains and airplanes. Particularly, the present invention relates to a mat which is capable of effectively reducing energy of radiations such as α-rays, β-ray, γ-rays, and X-rays, electromagnetic waves, vibrations, sounds, impacts, radiations and which has excellent antibacterial properties, antiviral properties, anti-allergen properties and deodorization properties.

### BACKGROUND ART

In recent years, measures against impacts of electromagnetic waves generated from motors, batteries and tires, for example malfunction of vehicle-mounted instruments and health hazards have been frequently emphasized in association with prevalence of automobiles, particularly hybrid cars and EV cars. On hybrid cars and EV cars, a large battery of 600 bolts or more is mounted, and since electromagnetic waves generated therefrom are incomparably greater than electromagnetic waves generated from mobile phones and microwave ovens, it is required to take thorough measures against the situation.

On the other hand, bacteria and viruses spread around us, and those susceptible to damage therefrom are less resistive aged persons, children, patients, for whom it is required to maintain a health life environment.

For the purpose of suppressing damage from bacteria and viruses, there have been heretofore proposed antibacterial fiber sheets, wherein a pile yarn containing copper and a pile yarn containing aluminum are driven in a discharging fiber sheet (see, for example, Patent Document 1).

On the other hand, there have been extensively proposed energy attenuation sheets in which a resin sheet containing an inorganic filler or a resin sheet having a continuous pore structure is employed to attenuate energy of vibrations and sounds (see, for example, Patent Documents 2 and 3).
JP 2001 083471 A, JP 2010 187826 A, JP 2007 297721 A, US 2007/190287 A1, US 6, 463 963 B1, JP 2008 054898 A, JP 2007 143802 A and JP 1 2005 089947 disclose mats with an allergen reduction filler. JP A 2009 106365 discloses an antistatic soundproof carpet. JP 2005 007750 A relates to an elastomer composition of a mat, but not to a mat structure. In JP 2005 002187 A also only an extrusion sheet for a mat is disclosed, but no mat structure. JP 2008 245825 A relates to a rental tile carpet. JP 2004 018769 A discloses a dust-proof mat with antimicrobial and drying property. In JP 2007 215765 A a pile yarn for a dust control mat is described. US 2002/045021 A1 relates to a floor mat with a nonwoven substrate with tufted carpet pile fibers and a rubber or foam rubber backing sheet. WO 00/07811 A1 discloses a similar mat as US 2002/045021 A1. DE 26 10 141 A1 discloses a method of producing a mat wherein the base layer comprises an adhesive coating. JP S 64-8118 B describes a backing layer for a carpet.

### PRIOR ART DOCUMENTS

### PATENT DOCUMENTS

Patent Document 1: Japanese Patent Laid-open Publication No. 6-248562
Patent Document 2: Japanese Patent Laid-open Publication No. 2000-190418
Patent Document 3: Japanese Patent Laid-open Publication No. 2005-84606

### SUMMARY OF THE INVENTION

### PROBLEMS TO BE SOLVED BY THE INVENTION

An object of the present invention is to provide a mat which is capable of significantly contributing to sound and healthy life environment, and particularly capable of effectively reducing energy of radiations such as α-rays, β-ray, γ-rays, and X-rays, electromagnetic waves, vibrations, sounds, impacts, radiations and which has excellent antibacterial properties, antiviral properties, anti-allergen properties and deodorization properties.

### SOLUTIONS TO THE PROBLEMS

For achieving the above-described object, the subject matter of the invention according to claim 1 is a mat with a backing layer formed on the back surface side of a fiber surface layer, wherein the fiber surface layer comprises a pile yarn driving base fabric and a pile yarn driven in the base fabric, and at least one of the base fabric and the pile yarn contains an organic attenuating filler, wherein the pile yarn driving base fabric is provided with a precoating on the back surface side, and the precoating contains an organic attenuating filler, wherein the pile yarn contains metal-plated conductive fibers, and wherein the organic attenuating filler comprises one or more compounds selected from p-(p-toluenesulfonylamide)diphenylamine, 4,4'-bis(α,α-dimethylbenzyl) diphenylamine, octylated diphenylamine, 2,2'-methylenebis(4-ethyl-6-tert-butylphenol) and 4,4'-thiobis(3-methyl-6-tert-butylphenol). Further described is a mat with a backing layer formed on the back surface side of a fiber surface layer, wherein at least one of the fiber surface layer and the backing layer contains one or more selected from an organic attenuating filler, an iodine complex, a radiation reduction filler and an allergen reduction filler.

The Described is that the fiber surface layer includes a pile yarn driving base fabric and a pile yarn driven in the base fabric, and at least one of the base fabric and the pile yarn contains one or more selected from an organic attenuating filler, an iodine complex, a radiation reduction filler and an allergen reduction filler.

Described is that the fiber surface layer includes a pile yarn driving base fabric, a pile yarn driven in the base fabric, and a discharge sheet laminated on the back surface side of the pile driving base fabric and containing conductive fibers that atmospherically discharge static electricity, the pile yarn is driven in the pile driving base fabric and the discharge sheet, and at least one of the base fabric, the pile yarn and the discharge sheet contains one or more selected from an organic attenuating filler, an iodine complex, a radiation reduction filler and an allergen reduction filler.

Described is that the pile yarn driving base fabric includes a nonwoven fabric containing a metal phthalocyanine compound or a derivative thereof.

Described is that the pile yarn driving base fabric includes a nonwoven fabric containing metal-plated conductive fibers.

Described is further that when the fiber surface layer includes a pile yarn driving base fabric, a pile yarn driven in the base fabric, and a discharge sheet laminated on the back surface side of the pile driving base fabric and containing conductive fibers that atmospherically discharge static electricity, the pile yarn is driven in the pile driving base fabric and the discharge sheet, and at least one of the base fabric, the pile yarn and the discharge sheet contains one or more selected from an organic attenuating filler, an iodine complex, a radiation reduction filler and an allergen reduction filler, the pile yarn driving base fabric includes a nonwoven fabric containing a metal phthalocyanine compound or a derivative thereof.

Described is further that when the fiber surface layer includes a pile yarn driving base fabric, a pile yarn driven in the base fabric, and a discharge sheet laminated on the back surface side of the pile driving base fabric and containing conductive fibers that atmospherically discharge static electricity, the pile yarn is driven in the pile driving base fabric and the discharge sheet, and at least one of the base fabric, the pile yarn and the discharge sheet contains one or more selected from an organic attenuating filler, an iodine complex, a radiation reduction filler and an allergen reduction filler, the pile yarn driving base fabric includes a nonwoven fabric containing metal-plated conductive fibers.

Described is that the pile yarn driving base fabric is provided with a precoating on the back surface side, and the precoating contains one or more selected from an organic attenuating filler, an iodine complex, a radiation reduction filler and an allergen reduction filler.

Described is that when the fiber surface layer includes a pile yarn driving base fabric, a pile yarn driven in the base fabric, and a discharge sheet laminated on the back surface side of the pile driving base fabric and containing conductive fibers that atmospherically discharge static electricity, the pile yarn is driven in the pile driving base fabric and the discharge sheet, and at least one of the base fabric, the pile yarn and the discharge sheet contains one or more selected from an organic attenuating filler, an iodine complex, a radiation reduction filler and an allergen reduction filler, the pile yarn driving base fabric is provided with a precoating on the back surface side, and the precoating contains one or more selected from an organic attenuating filler, an iodine complex, a radiation reduction filler and an allergen reduction filler.

The pile yarn contains metal-plated conductive fibers.

Described is that when the fiber surface layer includes a pile yarn driving base fabric, a pile yarn driven in the base fabric, and a discharge sheet laminated on the back surface side of the pile driving base fabric and containing conductive fibers that atmospherically discharge static electricity, the pile yarn is driven in the pile driving base fabric and the discharge sheet, and at least one of the base fabric, the pile yarn and the discharge sheet contains one or more selected from an organic attenuating filler, an iodine complex, a radiation reduction filler and an allergen reduction filler, and the pile yarn driving base fabric is provided with a precoating on the back surface side, and the precoating contains one or more selected from an organic attenuating filler, an iodine complex, a radiation reduction filler and an allergen reduction filler, the pile yarn contains metal-plated conductive fibers.

Described is that the backing layer includes a resin sheet, and the resin sheet contains one or more selected from an organic attenuating filler, an iodine complex, a radiation reduction filler and an allergen reduction filler.

Described is that the backing layer has a foamed resin structure foamed at a foaming ratio of 1 to 30, has an infinite number of pores opened at the surface, contains short fibers, and has a hardness of 10 to 40 degrees.

Described is that when the backing layer has a foamed resin structure foamed at a foaming ratio of 1 to 30, has an infinite number of pores opened at the surface, contains short fibers, and has a hardness of 10 to 40 degrees, the short fiber contained in the backing layer is any one or more among the fiber group of polyamide fibers, vinylon fibers, vinylidene fibers, polyvinyl chloride fibers, polyester fibers, acrylic fibers, polyethylene fibers, polypropylene fibers, polychlal fibers, rayon fibers, acetate fibers, cotton, hemp, wool fibers and feather fibers.

Described is that when the backing layer includes a resin sheet, and the resin sheet contains one or more selected from an organic attenuating filler, an iodine complex, a radiation reduction filler and an allergen reduction filler, a large number of locking projections for preventing dislocation are provided on the back surface side of the backing layer, portions having no locking force or portions having a small locking force as compared to other portions are formed on the circumferential surfaces of the locking projections, and the portions having no locking force or the portions having a small locking force as compared to other portions in the locking projections are formed to face in a fixed direction.

Described is that when the backing layer has a foamed resin structure foamed at a foaming ratio of 1 to 30, has an infinite number of pores opened at the surface, contains short fibers, and has a hardness of 10 to 40 degrees, a large number of locking projections for preventing dislocation are provided on the back surface side of the backing layer, portions having no locking force or portions having a small locking force as compared to other portions are formed on the circumferential surfaces of the locking projections, and the portions having no locking force or the portions having a small locking force as compared to other portions in the locking projections are formed to face in a fixed direction.

Described is that the backing layer includes a fiber sheet including a felt, a weave, a knit, a nonwoven fabric or a composite thereof, and the fiber sheet contains one or more selected from an organic attenuating filler, an iodine complex, a radiation reduction filler and an allergen reduction filler.

Described is that a lining material for preventing dislocation is attached on the back surface side of the backing layer, the lining material includes a pile knitted product or a pile woven product knitted or woven using a loop-shaped pile yarn formed of a monofilament, the loop-shaped pile yarn is cut, and a cut end thereof is projected as a locking portion that locks a floor surface.

Described is that the backing layer is bonded to the fiber surface layer with an adhesive layer interposed therebetween, and the adhesive layer contains one or more selected from an organic attenuating filler, an iodine complex, a radiation reduction filler and an allergen reduction filler.

The organic attenuating filler includes one or more compounds selected from p-(p-toluenesulfonylamide)diphenylamine, 4,4'-bis(α, α-dimethylbenzyl)diphenylamine, octylated diphenylamine, 2,2'-methylenebis(4-ethyl-6-tert-butylphenol) and 4,4'-thiobis(3-methyl-6-tert-butylphenol). Described is that the iodine complex is a iodo hall with iodine carried and stored on a carrier to form a complex, or a iodine clathrate with the iodo hall included, as a guest molecule, in a host molecule, the radiation reduction filler includes one or more selected from an organic filler selected from a metal phthalocyanine compound and a derivative thereof, a metal-based filler selected from tungsten, indium, cesium, lead, lead hydroxide, barium, barium hydroxide, barium stearate, boron trinitride and a gadolinium salt, and a combination thereof, and the allergen reduction filler includes one or more selected from a metal phthalocyanine compound, a derivative thereof, a clay mineral and a terpenoid.

### EFFECTS OF THE INVENTION

A mat of the present invention is capable of effectively reducing energy of radiations such as α-rays, β-ray, γ-rays, and X-rays, electromagnetic waves, vibrations, sounds, impacts, radiations because at least one of a fiber surface layer and a backing layer contains an organic attenuating filler. Particularly, the mat of the present invention is considered to significantly contribute to measures against electromagnetic waves and radiations in hybrid cars and EV cars because the organic attenuating filler and the radiation reduction filler can reliably absorb and remove electromagnetic waves and radiations.

### BRIEF DESCRIPTION OF THE DRAWINGS

Fig. 1 is an enlarged sectional view illustrating one configuration of a mat of the present invention.
Fig. 2 is an enlarged sectional view illustrating another configuration of a mat of the present invention.
Fig. 3 is a plan view of a principal part illustrating a backing layer of the back surface of the mat of the present invention.
Fig. 4 is an enlarged plan view of a locking projection formed on the backing layer illustrated in Fig. 3.
Fig. 5 is an enlarged perspective view of the locking projection formed on the backing layer illustrated in Fig. 3.
Fig. 6 is an enlarged sectional view of a principal part when viewing the front side from the rear side at the time of laying on the floor surface the mat illustrated in Fig. 3.
Fig. 7 is a plan view of a principal part illustrating another example of a backing layer of the back surface of the mat of the present invention.
Fig. 8 is an enlarged plan view of a locking projection formed on the backing layer illustrated in Fig. 7.
Fig. 9 is an enlarged front view of the locking projection formed on the backing layer illustrated in Fig. 8.
Fig. 10 is an enlarged side view of the locking projection formed on the backing layer illustrated in Fig. 8.
Fig. 11 is a plan view of a principal part illustrating still another example of a backing layer of the back surface of the mat of the present invention.
Fig. 12 is an enlarged plan view of a locking projection formed on the backing layer illustrated in Fig. 11.
Fig. 13 is an enlarged perspective view of the locking projection formed on the backing layer illustrated in Fig. 11.
Fig. 14 is a plan view of a principal part illustrating still another example of a backing layer of the back surface of the mat of the present invention.
Fig. 15 is an enlarged plan view of a locking projection formed on the backing layer illustrated in Fig. 14.
Fig. 16 is an enlarged front view of the locking projection formed on the backing layer illustrated in Fig. 14.
Fig. 17 is an enlarged side view of the locking projection formed on the backing layer illustrated in Fig. 14.
Fig. 18 is a plan view of a principal part illustrating still another example of a backing layer of the back surface of the mat of the present invention.
Fig. 19 is an enlarged plan view of a locking projection formed on the backing layer illustrated in Fig. 18.
Fig. 20 is an enlarged front view of the locking projection formed on the backing layer illustrated in Fig. 18.
Fig. 21 is an enlarged side view of the locking projection formed on the backing layer illustrated in Fig. 18.
Fig. 22 is a plan view of a principal part illustrating still another example of a backing layer of the back surface of the mat of the present invention.
Fig. 23 is an enlarged plan view of a locking projection formed on the backing layer illustrated in Fig. 22.
Fig. 24 is an enlarged front view of the locking projection formed on the backing layer illustrated in Fig. 22.
Fig. 25 is an enlarged side view of the locking projection formed on the backing layer illustrated in Fig. 22.
Fig. 26 is an enlarged sectional view of a principal part of a mat illustrating still another example of a mat of the present invention.
Fig. 27 is an enlarged plan view of a principal part of a lining material illustrated in Fig. 26.
Fig. 28 is a sectional view illustrating a state when the mat of the present invention is laid on a carpet of the floor surface.
Fig. 29 is a plan view illustrating still another example of a mat of the present invention.
Fig. 30 is a graph illustrating a result of evaluation of electromagnetic wave attenuation performance for the mat illustrated in Fig. 2.

### EMBODIMENTS OF THE INVENTION

A mat of the present invention will be described further in detail below with reference of the drawings. The mat of the present invention is a mat which is applied to carpets to be laid in rooms, chair mats for operations of computers, floor surface mats to be laid on entrances of rooms, door mats, floor surface mats to be laid in elevators or in front of opening/closing doors of elevator halls, or floor mats to be laid in cabins of automobiles, trains and airplanes.

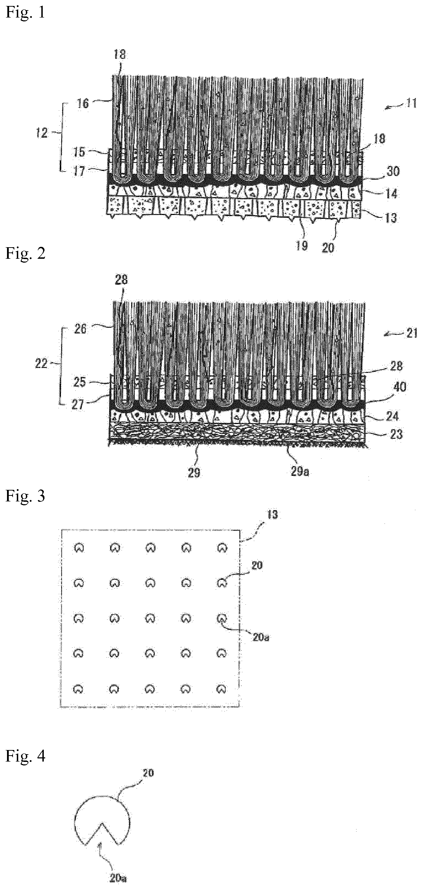

Mats 11 and 21 illustrated in Figs. 1 and 2 include fiber surface layers 12 and 22, backing layers 13 and 23 formed on the back surface side of the fiber surface layer, and adhesive layers 14 and 24 provided between the fiber surface layer and the backing layer, and the fiber surface layers 12 and 22, backing layers 13 and 23 and adhesive layers 14 and 24 contain an organic attenuating filler and can contain one or more selected from a radiation reduction filler (marked as ●), a iodine complex and an allergen reduction filler (marked as Δ).

The organic attenuating filler can effectively reduce energy of electromagnetic waves, vibrations, sounds, impacts, and examples thereof include those including one or more compounds selected from p-(p-toluenesulfonylamide)diphenylamine, 4,4'-bis(α, α-dimethylbenzyl)diphenylamine, octylated diphenylamine, 2,2'-methylenebis(4-ethyl-6-tert-butylphenol) and 4,4'-thiobis(3-methyl-6-tert-butylphenol).

The organic attenuating filler has the above-described compound existing as a microphase-separated dispersion phase or a fully compatibilized dispersion phase in matrix phases of resins that form fiber surface layers 12 and 22, backing layers 13 and 23 and adhesive layers 14 and 24 of mats 11 and 21. The dispersion phase is desired to exist in the matrix phase in a size of an average particle diameter of 1 µm or less, more preferably an average particle diameter of 0.1 µm or less in that an energy attenuating effect is more effectively exhibited.

The compound that forms the dispersion phase is desired to be contained in a ratio of 1 to 60 parts by weight, preferably 15 to 50 parts by weight based on 100 parts by weight of resins that form the matrix phase. When the content of the compound is less than 1 part by weight, sufficient energy attenuating properties cannot be obtained, and when the content of the compound is more than 60 parts by weight, economical efficiency is deteriorated because attenuating properties corresponding to an extra amount of the compound cannot be obtained.

In addition to the above-described compound, for example, substances such as carbon black, mica scales, glass chips, glass fibers, carbon fibers, calcium carbonate, barite, precipitated barium sulfate, stearic acid and ester oil, and a corrosion inhibitor, a dye, an antioxidant, an antistatic agent, a stabilizer, a wetting agent can be appropriately added in the matrix phases of resins that form mats 11 and 21, fiber surface layers 12 and 22, backing layers 13 and 23 and adhesive layers 14 and 24.

The radiation reduction filler has a function enabling the amount of transmitted radiations to be reduced by reflecting or absorbing radiations such as α-rays or β-rays and γ-rays or X-rays. Specific examples of the radiation reduction filler may include one or more selected from an organic filler selected from metal phthalocyanine compounds shown in the following formula and derivatives thereof (metal M is a metal selected from Fe, Co, Mn, Ti, V, Ni, Cu, Zn, Mo, W and Os), a metal-based filler selected from tungsten, indium, cesium, lead, lead hydroxide, barium, barium hydroxide, barium stearate, boron trinitride and a gadolinium salt, and a combination thereof.

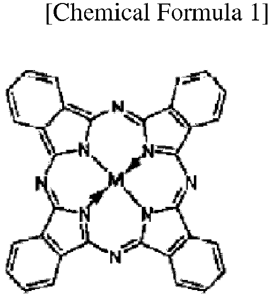

The content of the radiation reduction filler is not particularly limited, and may be appropriately determined according to a use purpose or a use form to which the multifunctional sheet of the present invention is applied.

The radiation reduction filler can be contained in the following form: the radiation reduction filler is deposited on the fiber surface layer or the backing layer (in fine pores when the backing layer is an open-cell type foamed resin sheet) with an adhesive component interposed therebetween, the adhesive component being one or more selected from an emulsion selected from an acrylic resin emulsion, a modified acrylic resin emulsion and an ethylene-vinyl acetate copolymer resin emulsion, a latex selected from a styrene-butadiene rubber latex, an acrylonitrile-butadiene rubber latex and a chloroprene rubber latex, and a solvent selected from an acrylic resin, an acrylic styrene resin, a urethane resin and an epoxy resin.

On the other hand, the iodine complex is one formed of an iodo hall with iodine or a triiodide (iodide) such as sodium iodide or potassium iodide carried and stored on an iodine carrier such as a polyether glycol, a polyacrylic acid, a polyamide, a polyoxyalkylene, a starch, polyvinyl pyrrolidone and polyvinyl alcohol to form a complex, or is one formed of an iodine clathrate with the iodo hall included, as a guest molecule, in a host molecule including one or more mixtures of cyclodextrin such as α-cyclodextrin, β-cyclodextrin, γ-cyclodextrin or cyclocyclodextrin, gelatin, lactose, carboxymethyl cellulose, gum arabic.

As the iodine clathrate, one with the iodo hall included such that the host molecule and the guest molecule exist in a weight ratio of 99 : 1 to 50 : 50 is preferred because it has a sufficient antibacterial effect and thermal stability. Among the above-mentioned iodine clathrates, an iodine clathrate with the iodo hall included in cyclodextrin as a host molecule is preferred because it is excellent in iodine retaining properties and excellent in thermal stability and dispersibility.

The effective amount of iodine in the iodine complex is desired to be at least 5%, preferably 5 to 20% in that sufficient antibacterial properties can be exhibited.

Which type of iodine complex is to be used may be appropriately determined in consideration of a level and a duration of required performance (e.g. an effective amount of iodine, an amount of iodine released per unit time, etc.), a temperature and a pressure during production, a use environment.

The iodine complex is desired to be contained in a ratio of 0.1 to 30 parts by weight, more preferably 1 to 25 parts by weight, most preferably 5 to 25 parts by weight based on 100 parts by weight of base resins that form fiber surface layers 12 and 22, backing layers 13 and 23 and adhesive layers 14 and 24 of mats 11 and 21. When the content of the iodine complex is less than 0.1 part by weight, sufficient performance may not be obtained, and when the content of the iodine complex is more than 30 parts by weight, the following adverse effects may arise: the effect is excessively strong, the iodine complex is not uniformly dispersed in a resin, the mechanical strength of fiber surface layers 12 and 22, backing layers 13 and 23 and adhesive layers 14 and 24 of mats 11 and 21 which contain the iodine complex is reduced.

The allergen reduction filler reduces an allergen amount by decomposing or adsorbing allergens such as pollens and mite dead bodies, and a specific example thereof may be one or more selected from metal phthalocyanine compounds shown in the following formula and derivatives thereof (metal M is a metal selected from Fe, Co, Mn, Ti, V, Ni, Cu, Zn, Mo, W and Os), and terpenoids such as a terpene hydrocarbon, a terpene alcohol, a terpene aldehyde and a terpene ketone, and clay minerals such as bentonite, montmorillonite, hidelite, hectorite, mica and talc.

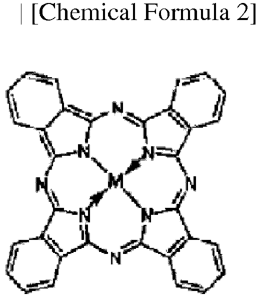

The content of the allergen reduction filler is not particularly limited, and may be appropriately determined according to a use purpose or a use form to which the multifunctional sheet of the present invention is applied.

The allergen reduction filler may be contained in the following form: the radiation reduction filler is deposited on the fiber surface layer or the backing layer (in fine pores when the backing layer is an open-cell type foamed resin sheet) with an adhesive component interposed therebetween, the adhesive component being one or more selected from an emulsion selected from an acrylic resin emulsion, a modified acrylic resin emulsion and an ethylene-vinyl acetate copolymer resin emulsion, a latex selected from a styrene-butadiene rubber latex, an acrylonitrile-butadiene rubber latex and a chloroprene rubber latex, or a solvent selected from an acrylic resin, an acrylic styrene resin, a urethane resin and an epoxy resin.

Next, fiber surface layers 12 and 22, backing layers 13 and 23 and adhesive layers 14 and 24 which contain an organic attenuating filler and can contain a radiation reduction filler (marked as ●), and a iodine complex and an allergen reduction filler (marked as Δ) will be described. As illustrated in Figs. 1 and 2, the fiber surface layers 12 and 22 include pile yarn driving base fabrics 15 and 25, and pile yarns 16 and 26 driven in the base fabrics 15 and 25. Examples of the base fabrics 15 and 25 may include nonwoven fabrics, weaves, knits, papers and felts having as constituent fibers one or more selected from polyolefin-based fibers such as those of polypropylene and polyethylene, polyester-based fibers such as those of polyethylene terephthalate, polyamide-based fibers such as those of nylon 6 and nylon 66, acryl-based fibers such as those of polyacrylonitrile, or synthetic fibers such as polyvinyl alcohol-based fibers, regenerated fibers such as rayon fibers, semisynthetic fibers such as acetate fibers, vegetable fibers such as those of cotton and hemp, and animal fibers such as wool fibers and feather fibers, or composites obtained by combining one or more thereof. In the configuration illustrated in Figs. 1 and 2, nonwoven fabrics having olefin-based fibers such as polyethylene fibers and polypropylene fibers as constituent fibers are employed as base fabrics 15 and 25. The material and structure of base fabrics 15 and 25 are not particularly limited, and may be appropriately determined in consideration of a use purpose and a use state of the mat.

A configuration can be employed in which the base fabrics 15 and 25 contain the above-described organic attenuating filler and radiation reduction filler (marked as ●), and iodine complex and allergen reduction filler (marked as Δ), and in this case, base fabrics 15 and 25 are capable of effectively reducing energy of radiations such as α-rays or β-rays and γ-rays or X-rays, electromagnetic waves, vibrations, sounds, impacts, and have excellent antibacterial properties, antiviral properties, anti-allergen properties and deodorization properties. They may be contained in an arbitrary form, and can be included as constituent fibers of base fabrics 15 and 25, as a binder for bonding constituent fibers, or as a resin with which the base fabrics 15 and 25 are coated or impregnated.

A configuration can be employed in which base fabrics 15 and 25 contain conductive fibers 18 and 28. Examples of the configuration in which base fabrics 15 and 25 contain conductive fibers 18 and 28 may include a configuration in which the conductive fibers are contained as a part of constituent fibers of base fabrics 15 and 25, and a configuration as discharge papers 17 and 27 which are laminated integrally to base fabrics 15 and 25 on the back surface side and have a function to atmospherically discharge static electricity. As conductive fibers 18 and 28, metal fibers such as stainless steel fibers or aluminum fibers, metal fibers obtained by forming a metal film of silver or copper on the surfaces of synthetic fibers such as those of polyethylene or polypropylene by conventional plating such as electroplating and non-electrolytic plating, fibers with a metal powder or a conductive compound powder mixed therein, carbon fibers, or fibers obtained by combining the above-described fibers.

In the case of the configuration in which conductive fibers 18 and 28 are contained as a part of constituent fibers of base fabrics 15 and 25, the electric capacity of base fabrics 15 and 25 is increased, static electricity charged on the human body is easily conducted, and the conductive fibers 18 and 28 atmospherically discharge the static electricity. Particularly when metal fibers using a metal such as silver or copper are used as conductive fibers 18 and 28 contained in base fabrics 15 and 25, an excellent static electricity removal function is exhibited and the antibacterial effect is further enhanced owing to metal ions such as those of silver or copper released from metal fibers.

On the other hand, in the case of the configuration as a discharge paper, for example, discharge papers 17 and 27 illustrated in Figs. 1 and 2 may be those produced by a wet papermaking method after mixing conductive fibers such as carbon fibers with synthetic fibers such as polyethylene fibers or polypropylene fibers, and further a wood pulp and a fibrous thermoplastic binder (e.g. polyvinyl alcohol) at a predetermined ratio, and further finely cutting the mixture through a beater to form a uniform mixture. Some of the conductive fibers are irregularly projected in a vertical or oblique direction at the surface of the paper, and these projected portions act like an antenna to atmospherically discharge static electricity.

A configuration can also be employed in which the base fabrics 15 and 25 contain a metal phthalocyanine compound shown in the following chemical formula or a derivative thereof. Metal M in the formula is a metal selected from Fe, Co, Mn, Ti, V, Ni, Cu, Zn, Mo, W and Os).

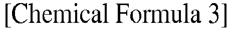

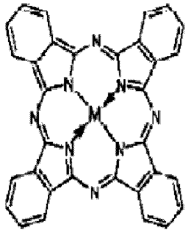

Examples of the configuration in which base fabrics 15 and 25 contain a phthalocyanine compound or a derivative thereof may include those formed by mix-spinning synthetic fibers, semisynthetic fibers or natural fibers carrying a phthalocyanine compound or a derivative thereof as constituent fibers. The phthalocyanine compound or a derivative thereof has excellent deodorization and anti-allergy functions, and when the base fabrics 15 and 25 contain a phthalocyanine compound or a derivative thereof, the obtained mat 11 is given an antibacterial effect from the phthalocyanine compound or a derivative thereof in addition to the antibacterial effect from the iodine complex, and therefore has a further excellent antibacterial, deodorization and anti-allergy functions. Further, when metal fibers using a metal such as silver or copper are used in combination as conductive fibers 18 and 28 in base fabrics 15 and 26, the base fabrics have an excellent antibacterial effect due to triple effects from an iodine complex, a phthalocyanine compound or a derivative thereof and metal ions such as those of silver or copper released from metal fibers.

Examples of pile yarns 16 and 26 struck in the base fabrics 15 and 25 may include those including yarns obtained by mix-spinning polyolefin-based fibers such as those of polypropylene and polyethylene, polyester-based fibers such as those of polyethylene terephthalate, polyamide-based fibers such as those of nylon 6 and nylon 66, acryl-based fibers such as those of polyacrylonitrile, or synthetic fibers such as polyvinyl alcohol-based fibers, regenerated fibers such as rayon fibers, semisynthetic fibers such as acetate fibers, vegetable fibers such as those of cotton and hemp, and animal fibers such as wool fibers and feather fibers alone or in combination of two or more thereof, and twisting the yarn to a predetermined thickness (e.g. 1800 to 4000 dtex). It is more preferred to employ, as a material of pile yarns 16 and 26, a material including a polar polymer such as polyamide-based fibers because the polar polymer itself has excellent performance of attenuating energy of electromagnetic waves. The pile yarns 16 and 26 are tufted to base fabrics 15 and 25 in a predetermined volume (e.g. 5 to 10 threads for each 2.54 cm (1-inch) interval) to form fiber surface layers 12 and 22.

A configuration can be employed in which pile yarns 16 and 26 contain the above-described organic attenuating filler and radiation reduction filler (marked as ●), and iodine complex and allergen reduction filler (marked as Δ). In this case, pile yarns 16 and 26 are capable of effectively reducing energy of radiations such as α-rays or β-rays and γ-rays or X-rays, electromagnetic waves, vibrations, sounds, impacts, and have excellent antibacterial properties, antiviral properties, anti-allergen properties and deodorization properties. They may be contained in an arbitrary form, and can be included as fibers that form pile yarns 16 and 26, or as a resin with which the pile yarns 16 and 26 are coated or impregnated.

A configuration can be employed in which the base fabrics 16 and 26 contain conductive fibers 18 and 28 like the base fabrics 15 and 25. In this case, conductive fibers 18 and 28 contained in pile yarns 16 and 26 make it easy to conduct static electricity charged on the human body, and the conductive fibers 18 atmospherically discharge the static electricity. Particularly when metal fibers obtained by using a metal such as silver or copper are used as conductive fibers 18 and 28 contained in base fabrics 16 and 26, an excellent static electricity removal function is exhibited and the antibacterial effect is further enhanced owing to metal ions such as those of silver or copper released from metal fibers.

In Mats 11 and 21 illustrated in Figs. 1 and 2, the back surfaces of fiber surface layers 12 and 22 are provided with precoatings 30 and 40 in order to prevent pile yarns 16 and 26 from falling out and improve conformability with the packing layer 13 and the adhesive layer 24. For the precoatings 30 and 40, for example, a polymer such as a styrene-butadiene-styrene copolymer, a styrene-ethylene-butylene-styrene block copolymer, an acrylonitrile-butadiene-based copolymer or a urethane resin, a rubber-based polymer such as styrene-butadiene rubber, acrylonitrile-butadiene rubber, butadiene rubber, natural rubber or isoprene rubber, a resin obtained by mixing two or more thereof, or the like may be used. The precoatings 30 and 40 can be formed by, for example, a method in which the aforementioned resin is sprayed in the form of an emulsion to the back surfaces of fiber surface layers 12 and 22. A configuration can be employed in which the mat of the present invention contain the above-described organic attenuating filler and can contain a radiation reduction filler (marked as ●), and iodine complex and allergen reduction filler (marked as Δ) in the precoatings 30 and 40. In this case, precoatings 30 and 40 are capable of effectively reducing energy of radiations such as α-rays or β-rays and γ-ray or X-rays, electromagnetic waves, vibrations, sounds, impacts, and have excellent antibacterial properties, antiviral properties, anti-allergen properties and deodorization properties.

A configuration can be employed in which backing layers 13 and 23 illustrated in Figs. 1 and 2 contain the above-described organic attenuating filler and can contain a radiation reduction filler (marked as ●), and iodine complex and allergen reduction filler (marked as Δ). In this case, backing layers 13 and 23 are capable of effectively reducing energy of radiations such as α-rays or β-rays and γ-rays or X-rays, electromagnetic waves, vibrations, sounds, impacts, and have excellent antibacterial properties, antiviral properties, anti-allergen properties and deodorization properties.

The backing layer 13 illustrated in Fig. 1 includes a resin sheet. Examples of the resin that forms the backing layer may include polymers such as a styrene-butadiene-styrene copolymer, a styrene-ethylene-butylene-styrene block copolymer, an acrylonitrile-butadiene-based copolymer and a urethane resin, rubber-based polymers such as styrene-butadiene rubber, acrylonitrile-butadiene rubber, butadiene rubber, natural rubber or isoprene rubber, and resins obtained by mixing two or more thereof. A filler, a foaming agent, a thickener and a dispersant may be added to the resin as necessary.

Examples of the filler may include sodium polyacrylates, carboxymethyl cellulose, talc, aluminum hydroxide and antimony oxide. Examples of the foaming agent include fatty acid soaps, sodium alkylallylsulfonates, higher alcohol sulfuric acid ester sodiums and monoamide disodium N-octadecylsulfosuccinate. Examples of the thickener include sodium polyacrylates, polyvinyl alcohol, casein and fermented polysaccharides, but low-molecular-weight sodium polyacrylates are preferred. Examples of the dispersant may include sodium tripolyphosphate and sodium hexametaphosphate.

A configuration can be employed in which the backing layer 13 has a foamed resin structure foamed at a foaming ratio of 1 to 30, has an infinite number of pores opened at the surface, contains short fibers, and has a hardness of 10 to 40 degrees. By employing the above-mentioned structure, the backing layer 13 has viscosity to dramatically increase a coefficient of friction with the floor surface, so that dislocation hardly occurs, and an effect of weight reduction can be obtained. Further, the backing layer includes a foamed resin containing short fibers, and therefore a strength that prevents the backing layer from being easily damaged by an external force applied to the mat 11.

When the backing layer 13 of the mat 11 illustrated in Fig. 1 is made soft so as to have a hardness of 10 to 40 degrees, the following effect is exhibited: even if the mat 11 is dislocated forward to get caught on the accelerator pedal or the brake pedal, the tip of the mat is easily bent to quickly detach the mat from the accelerator pedal or the brake pedal, so that the possibility that the mat interferes with the accelerator pedal or the brake pedal to affect pedal operations is eliminated. When the hardness of the backing layer 13 falls out of the above-described range, either a strength capable of sufficiently resisting an external force applied to the floor mat or a softness that prevents the mat from interfering with the pedal even if the mat is dislocated cannot be obtained.

When the foaming ratio of the backing layer 13 is less than 1, an effect to dramatically increase the coefficient of friction with the floor surface and reduce the weight cannot be obtained, and when the foaming ratio is more than 30, the backing layer becomes fragile, so that an external force applied to the mat may not be sufficiently resisted.

In the case of the above-mentioned configuration, the hardness of the backing layer 13 is adjusted to 10 to 40 degrees by including short fibers in the backing layer 13. The short fiber contained in the backing layer 13 may be any one or more among, for example, synthetic fibers such as polyamide fibers, vinylon fibers, vinylidene fibers, polyvinyl chloride fibers, polyester fibers, acrylic fibers, polyethylene fibers, polypropylene fibers and polychlal fibers, regenerated fibers such as rayon fibers, semisynthetic fibers such as acetate fibers, vegetable fibers such as those of cotton and hemp, animal fibers such as wool fibers and feather fibers, metal fibers, carbon fibers, glass fibers and ceramic fibers. When short fibers are mixed in the backing layer, not only the hardness is adjusted, but also sound absorbency becomes higher because an infinite number of spaces are formed in the foamed resin layer. The fiber diameter and fiber length of short fibers contained in the backing layer are not particularly limited, but the fiber diameter is 10 dtex or less, preferably 5 dtex, most preferably 5 dtex or less, and the fiber length is 1 mm or less, preferably 0.1 mm or less, most preferably 0.01 mm in that the fibers can be uniformly dispersed in a resin that forms the backing layer.

A configuration can also be employed in which the backing layer 13 contains a crosslinker such as, for example, divinyl benzene, ethylene glycol dimethacrylate, triethylene glycol dimethacrylate, triacrylformal, trimethylolpropane trimethacrylate, allyl methacrylate, 1,3-butyl glycol dimethacrylate, triallyl isocyanate, pentaerythritol tetraacrylate, dipentaerythritol tetramethacrylate, dipentaerythritol hexaacrylate or dipentaerythritol hexamethacrylate. This enables the foamed resin structure of the backing layer 13 to be further strengthened.

The content of the crosslinker is not limited, but is preferably 0.1 to 2 parts by mass, more preferably 0.1 to 1.5 parts by mass based on 100 parts by mass of the base resin.

The backing layer 13 has a through-hole 19 extending therethrough in the front/rear direction, and locking projections 20 for preventing dislocation are provided on the back surface side. Locking projections 20 are not particularly limited, but for example, as illustrated in Figs. 3 to 25, portions having no locking force or portions having a small locking force as compared to other portions can be formed on the circumferential surfaces of a large number of locking projections 20 for preventing dislocation on the back surface side of the backing layer 13 such that the portions having no locking force or the portions having a small locking force as compared to other portions in the locking projections 20 face in a fixed direction. For example, in the case where a mat having the above-mentioned configuration is applied to a floor mat to be laid on the floor surface of an automobile, when the mat is provided such that portions having no locking force or portions having a small locking force as compared to other portions in the locking projections 20 face in a direction opposite to the traveling direction of the automobile, the locking force of the locking projections acts in the traveling direction of the automobile, and therefore even when a load is applied in the traveling direction of the automobile by a driver or a passenger during driving, the locking projections effectively suppress dislocation of the mat by resiting the force.

On the other hand, portions having no locking force or portions having a small locking force as compared to other portions in the locking projections 20 face in a direction opposite to the traveling direction of the automobile, and therefore the locking force of the locking projections does not act in this direction, so that removal and position adjustment of the mat can be smoothly performed.

The locking projection 20 illustrated in Figs. 3 to 6 is substantially conical, a part of the circumferential surface thereof is cut out from the top to the bottom of the locking projection, and a portion having no locking force is formed by the cut portion 20a. The configuration illustrated in Figs. 3 to 6 shows an example in which the mat 11 of the present invention is applied to a floor mat of an automobile, where the locking projections 20 of the back surface of the backing layer 13 are arranged such that cut portions 20a having no locking force face toward the rear side of the automobile when the mat 11 is laid on the automobile floor surface. Therefore, when a load is applied in the traveling direction of the automobile (direction toward the front side) by a driver or a passenger during driving, the locking projections 20 bite into the carpet of the automobile floor surface to lock the carpet, so that dislocation of the mat is reliably prevented.

On the other hand, when the mat is drawn toward the rear side for laying the mat at a predetermined position on the floor surface, the mat can be smoothly position-adjusted because cut portions 20a formed on the circumferential surfaces of the locking projections 20 and having no locking force are arranged to face toward the rear side.

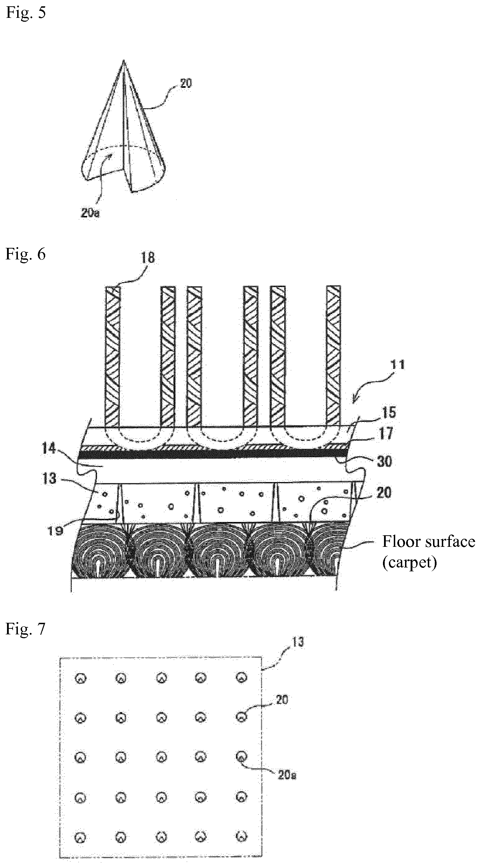

In the configuration illustrated in Figs. 7 to 10, a large number of substantially conical locking projections 20 are formed on the back surface of the backing layer 13, a part of the circumferential surface of the locking projection is cut out from almost the center to the bottom of the locking projection, and the cut portion 20a has a reduced height as compared to other portions and has an accordingly smaller locking force.

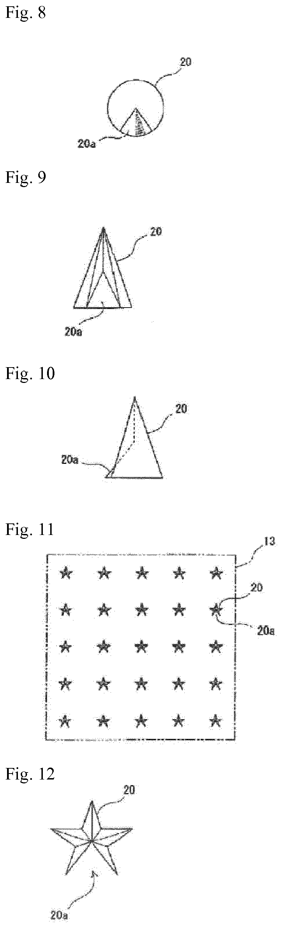

In the configuration illustrated in Figs. 11 to 13, a large number of star-like spindle-shaped locking projections 20 are formed on the back surface of the backing layer 13, a part of the circumferential surface of the locking projection is cut out from the top to the bottom of the locking projection, and a portion having no locking force is formed by the cut portion 20a.

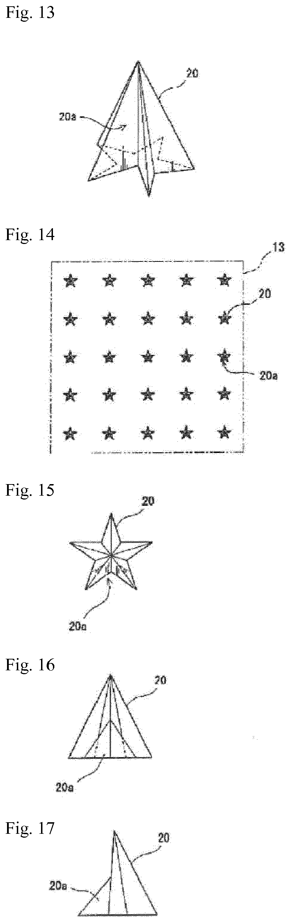

In the configuration illustrated in Figs. 14 to 17, a large number of star-like spindle-shaped locking projections 20 are formed on the back surface of the backing layer 13, a part of the circumferential surface of the locking projection is cut out from almost the center to the bottom of the locking projection, and the cut portion 20a has a reduced height as compared to other portions and has an accordingly smaller locking force.

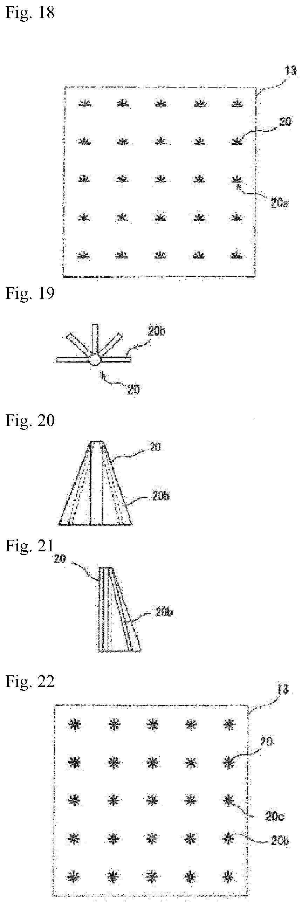

In the configuration illustrated in Figs. 18 to 21, a large number of locking projections 20 are provided on the back surface side of the backing layer 13, and a plurality of locking pieces 20b are formed on the circumferential surface of each locking projection 20. In the configuration illustrated in Figs. 18 to 21, a portion having no locking piece 20b is formed on the circumferential surface of the locking projection 20, and this portion forms a portion having no locking force.

In the configuration illustrated in Figs. 22 to 25, a large number of locking pieces 20b are formed on the circumferential surface of each locking projection 20 of the backing layer 13, a locking piece 20c having a reduced height as compared to the locking piece 20b is formed on a part of the circumferential surface of the locking projection 20, and the cut piece 20c has a reduced height as compared to other portions and has an accordingly smaller locking force.

The backing layer 23 in the mat 21 illustrated in Fig. 2 is a fiber sheet including a felt, a weave, a knit or a nonwoven fabric having as constituent fibers one or more selected from polyolefin-based fibers such as those of polypropylene and polyethylene, polyester-based fibers such as those of polyethylene terephthalate, polyamide-based fibers such as those of nylon 6 and nylon 66, acryl-based fibers such as those of polyacrylonitrile, or synthetic fibers such as polyvinyl alcohol-based fibers, regenerated fibers such as rayon fibers, semisynthetic fibers such as acetate fibers, vegetable fibers such as those of cotton and hemp, animal fibers such as wool fibers and feather fibers, metal fibers, carbon fibers, glass fibers and ceramic fibers, or a composite thereof.

A lining material 29 for preventing dislocation is attached on the back surface side of the backing layer 23. The lining material 29 is not particularly limited, and examples thereof may include those including a pile knitted product or a pile woven product knitted or woven using a loop-shaped pile yarn formed of a monofilament, wherein the loop-shaped pile yarn is cut, and the cut end thereof is projected as a locking portion that locks the floor surface. For example, the lining material 29 illustrated in Fig. 2 is a knit formed by cutting a loop-shaped warp that connects the surface and the back surface of a warp knitting weft-inserted knit (not illustrated), with a cut end 29a of the warp being projected as a locking portion to exhibit a dislocation prevention function.

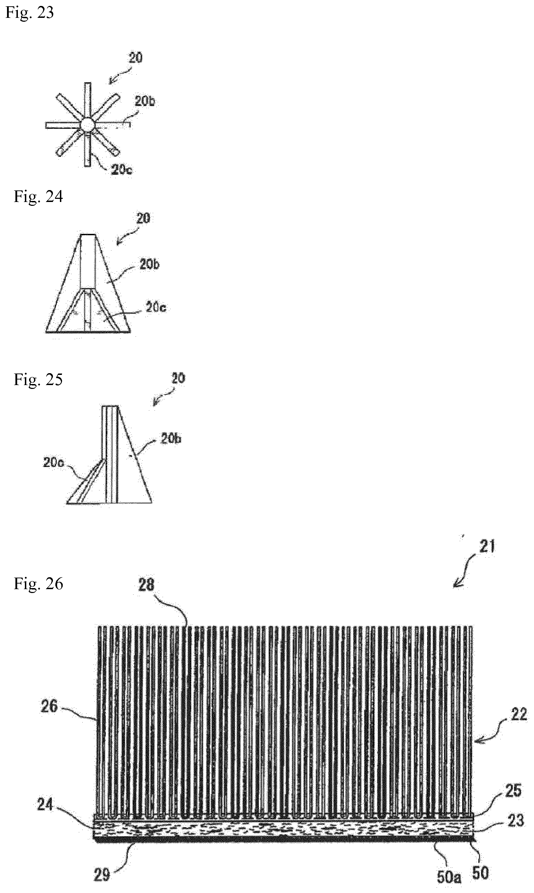

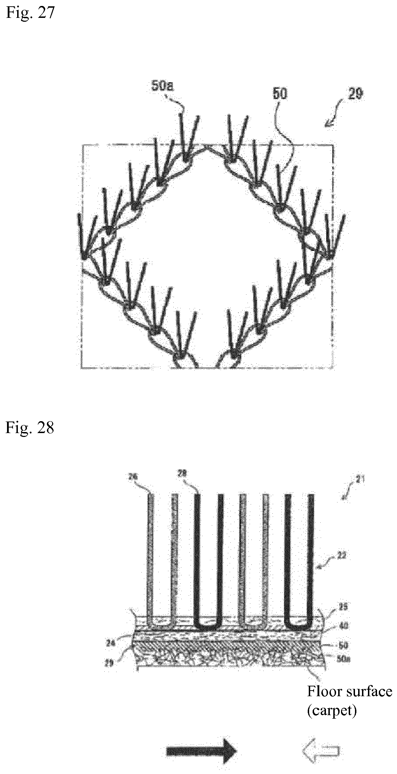

A configuration can also be employed in which the lining material 29 has its cut end inclined and projected in one direction as a locking portion that locks the floor surface. For example, in the example illustrated in Figs. 26 and 27, a loop-shaped pile yarn 50 is formed by weaving two monofilaments in a diamond shape into a base knitted fabric formed of a ground yarn, and the tip of the loop-shaped pile yarn 50 is cut, whereby two cut ends 50a are inclined in the knitting direction and each cut end 50a is opened in substantially a V shape. For reliably inclining cut ends 50a in a fixed direction, a pile knitted product or pile woven product having a loop-shaped pile yarn whose tip is cut (or a pile knitted product or pile woven product having a loop-shaped pile yarn whose tip is not cut is acceptable) is placed on a heat plate with the cut end (loop-shaped pile yarn) situated on the lower side, and heat-treated while being pressed obliquely rearward from above, whereby the cut end (loop-shaped pile yarn) can be inclined in a fixed direction, and its shape can be fixed.

In the lining material 29 of the mat 21 illustrated in Figs. 26 and 27, the cut end 50a of the loop-shaped pile yarn 50 is inclined only in one direction. Thus, for example, in the case where the mat 21 is used as a floor mat of an automobile, when the lining material 29 is attached to the mat 21 such that the cut end 50a of the loop-shaped pile yarn 50 is inclined and projected toward the front side of the automobile, the cut end 50a of the loop-shaped pile yarn 50 bites into the automobile floor surface (carpet) and acts as a locking portion even when a load is applied in the traveling direction of the automobile by a driver or a passenger during driving as illustrated in Fig. 28, so that dislocation of the mat 21 is reliably prevented. In an opposite direction (direction toward the rear side of the automobile), the cut end 50a does not bite into the automobile floor surface (carpet), and therefore does not act as a locking portion, so that detachment and position adjustment of the mat can be smoothly performed.

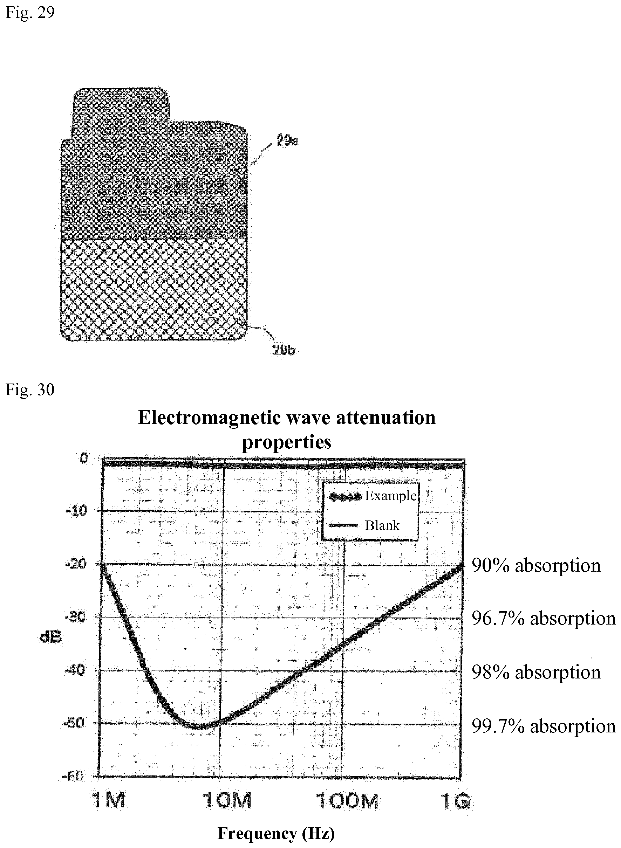

As another configuration, as a lining material in which cut ends of loop-shaped pile yarns are inclined and projected in one direction as locking portions that lock the floor surface, a lining material 29a having a fine density of loop-shaped pile yarns and a lining material 29b having coarse density of loop-shaped pile yarns can be provided as illustrated in Fig. 29, followed by attaching these two lining materials 29a and 29b to the back surface of the mat. For example when the mat is applied to a floor mat of an automobile, the lining material 29a having a fine density is attached on the front side of the mat, and the lining material 29b having a coarse density is attached on the rear side of the mat. When the mat is laid on the floor surface (carpet), a heavy load is applied on the front side of the mat by a driver or a passenger during driving, but the lining material 29a having a fine density of loop-shaped pile yarns has a high density and hence a large locking force, so that the heavy load can be resisted. On the other hand, the lining material 29b having a coarse density of loop-shaped pile yarns has a low density and hence a small locking force, so that position adjustment of the mat can be smoothly performed.

As illustrated in Figs. 1 and 2, the fiber surface layers 12 and 22 (base fabrics 15 and 25) and backing layers 13 and 23 are bonded with adhesive layers 14 and 24 interposed therebetween. The adhesive layers 14 and 24 include a hot melt resin. As the hot melt resin, a polyamide-based hot melt resin, a polystyrene-based hot melt resin, a polyethylene-based hot melt resin, an EVA-based hot melt resin can be suitably used. The hot melt resin can be interposed between the fiber surface layers 12 and 22 (base fabrics 15 and 25) and the backing layers 13 and 23 in the form of a cobweb-like film. The hot melt resin can also be added in the form of an emulsion between both the layers. In the case of the mat 11 illustrated in Fig. 1, the adhesive layer can be omitted by thermocompression-bonding the semi-molten backing layer 13 to the fiber surface layer 12 to infiltrate a part of the backing layer 13 into the fiber surface layer 12 to be solidified.

A configuration can be employed in which the adhesive layers 14 and 24 contain the above-described organic attenuating filler and radiation reduction filler (marked as ●), and iodine complex and allergen reduction filler (marked as Δ). In this case, adhesive layers 14 and 24 are capable of effectively reducing energy of radiations such as α-rays or β-rays and γ-rays or X-rays, electromagnetic waves, vibrations, sounds, impacts, and have excellent antibacterial properties, antiviral properties, anti-allergen properties and deodorization properties.

The scope of the present invention is as defined in "claims", and all modifications and modes included in claims may be employed.

### Example

A mat 11 illustrated in Fig. 1 includes a pile yarn driving base fabric 15 including a nonwoven fabric containing a metal phthalocyanine compound or a derivative thereof and silver-plated conductive fibers, and a fiber surface layer 12 including the pile yarn driving base fabric 15, wherein a pile yarn 16 containing silver fibers 18 is driven in the pile yarn driving base fabric 15.

A precoating 14 containing an organic attenuating filler (marked as ●) and a iodine complex (marked as Δ) is provided on the back surface side of the fiber surface layer 12, and a backing layer 13 including a foamed resin sheet having an open-cell structure including hemp short fibers with a styrene-ethylene-butylene-styrene block copolymer as a base is formed on the back surface side of the fiber surface layer 12 with the precoating 14 interposed therebetween. A large number of through-holes 19 and projections 20 for preventing dislocation are formed on the backing layer 13. The fiber surface layer 12 contains a radiation reduction filler (marked as ●) and an allergen reduction filler (marked as Δ).

For the mat described above, electromagnetic wave attenuation properties were evaluated. Evaluation of electromagnetic wave attenuation properties was performed by measuring electromagnetic wave attenuation properties (dB) in a frequency range of 1 MHz to 1 GHz by a KEC method (near electric field, near magnetic field (MA 8602B manufactured by ANRITSU CORPORATION)) using a spectrum analyzer (R3132 manufactured by ADVANTEST CORPORATION). The results are shown in Fig. 30. For comparison, electromagnetic wave attenuation properties (dB) were measured to evaluate the electromagnetic wave attenuation properties also for a blank mat (where a fiber surface layer formed by driving a predetermined volume of pile yarns, which did not contain silver fibers, in a pile yarn driving base fabric which did not contain a metal phthalocyanine compound or a derivative thereof was provided, a precoating which did not contain an organic attenuating filler (marked as ●) and a iodine complex (marked as Δ) was provided on the back surface side of the fiber surface layer, and a backing layer including a foamed resin sheet as described above was formed on the back side).

The graph of Fig. 30 shows that for the blank mat, attenuation of electromagnetic waves in a frequency range of 1 MHz to 1 GHz was not observed, while for the mat according to Example, electromagnetic waves in a frequency range of 1 MHz to 300 MHz, for which evaluation was performed, among electromagnetic waves in a frequency range of 30 to 300 MHz which are supposed to be easily absorbed in the human body, were absorbed at a rate of 90 to 99.7%. Also, the mat of Example showed an absorption ratio of 90% for electromagnetic waves at a frequency of 1 GHz which are associated with carcinogenicity and supposed to likely cause malfunction of electronic devices, and therefore it was confirmed that the mat according to Example was excellent in electromagnetic wave attenuation properties.

For the mat according to Example, antibacterial effects were evaluated. Antibacterial effects were evaluated by inoculating the mat illustrated in Fig. 2 and the blank mat by immersing the mats in bacterial solutions containing Staphylococcus aureus, Streptococcus pneumoniae and MRSA, respectively, and counting the number of living bacteria immediately after inoculation and after 18 hours of culture. For the mat illustrated in Fig. 2, antibacterial effects after washing 5 times were also evaluated. The antibacterial effects on Staphylococcus aureus, Streptococcus pneumoniae and MRSA for the mat illustrated in Fig. 2 and the blank mat are shown in Tables 1 to 3 below.

**[Table 1]**

| Staphylococcus aureus | Immediately after inoculation of bacterial solution | | After 18 hours of culture | |
|---|---|---|---|---|
| | Number of bacteria (logarithm) | Number of bacteria (real number) | Number of bacteria (logarithm) | Number of bacteria (real number) |
| Development product | 4.3 | 19,953 | 1.3 or less | 20 or less |
| After washing 5 times | 4.5 | 31,623 | 1.3 or less | 20 or less |
| Blank | 4.5 | 31,623 | 7.1 | 12,589,254 |

**[Table 2]**

| Klebsiella pneumoniae | Immediately after inoculation of bacterial solution | | After 18 hours of culture | |
|---|---|---|---|---|
| | Number of bacteria (logarithm) | Number of bacteria (real number) | Number of bacteria (logarithm) | Number of bacteria (real number) |
| Development product | 3.8 | 6,309 | 1.3 or less | 20 or less |
| After washing 5 times | 4.2 | 15,848 | 1.3 or less | 20 or less |
| Blank | 4.5 | 31,622 | 7.5 | 31,622,777 |

**[Table 3]**

| MRSA | Immediately after inoculation of bacterial solution | | After 18 hours of culture | |
|---|---|---|---|---|
| | Number of bacteria (logarithm) | Number of bacteria (real number) | Number of bacteria (logarithm) | Number of bacteria (real number) |
| Development product | 4.4 | 25,119 | 1.5 | 32 |
| After washing 5 times | 4.4 | 25,119 | 1.3 or less | 20 or less |
| Blank | 4.4 | 25,119 | 7.1 | 12,589,254 |

From Tables 1 to 3, the numbers of bacteria (real number) after 18 hours of culture for Staphylococcus aureus, Streptococcus pneumoniae and MRSA are 12,589,254, 31,622,777 and 12,589,254, respectively, in the case of the blank mat, while in the case of the mat according to Example, the numbers of bacterial (real number) after 18 hours of culture for the above-described bacteria are 20 or less, 20 or less and 32, respectively, and the numbers of bacterial (real number) after washing 5 times after 18 hours of culture were 20 or less for all of the above-described bacteria, and therefore it has been confirmed that the mat of Example has an excellent antibacterial effect.

### INDUSTRIAL APPLICABILITY

The present invention proposes a mat which is capable of significantly contributing to sound and healthy life environment, and particularly capable of effectively reducing energy of radiations such as α-rays, β-ray, γ-rays, and X-rays, electromagnetic waves, vibrations, sounds, impacts, radiations, and which can have excellent antibacterial properties, antiviral properties, anti-allergen properties and deodorization properties. The mat can be suitably applied to carpets to be laid in rooms, chair mats for operations of computers, floor surface mats to be laid on entrances of rooms, door mats, floor surface mats to be laid in elevators or in front of opening/closing doors of elevator halls, and floor mats to be laid in cabins of automobiles, trains and airplanes, particularly floor mats to be laid in cabins of hybrid cars and EV cars for which it is required to take measures against impacts of electromagnetic waves, for example malfunction of vehicle-mounted instruments and health hazards.

### DESCRIPTION OF REFERENCE SIGNS

12, 22: Fiber surface layer
13, 23: Backing layer
14, 24: Adhesive layer
15, 25: Base fabric
16, 26: Pile yarn
18, 28: Conductive fiber

## Claims

1. A mat with a backing layer formed on the back surface side of a fiber surface layer, wherein the fiber surface layer comprises a pile yarn driving base fabric and a pile yarn driven in the base fabric, and at least one of the base fabric and the pile yarn contains an organic attenuating filler,
wherein the pile yarn driving base fabric is provided with a precoating on the back surface side, and the precoating contains an organic attenuating filler,
wherein the pile yarn contains metal-plated conductive fibers, and wherein the organic attenuating filler comprises one or more compounds selected from p-(p-toluenesulfonylamide)diphenylamine, 4,4'-bis(α, α-dimethylbenzyl)diphenylamine, octylated diphenylamine, 2,2'-methylenebis(4-ethyl-6-tert-butylphenol) and 4,4'-thiobis(3-methyl-6-tert-butylphenol).

## Patentansprüche

1. Matte mit einer auf der Rückflächenseite einer Faserflächenschicht gebildeten Trägerschicht, wobei die Faserflächenschicht ein Grundgewebe zum Einbringen eines Polgarns und ein in das Grundgewebe eingebrachtes Polgarn umfasst, und wobei mindestens ein Element aus dem Grundgewebe und dem Polgarn ein organisches dämpfendes Füllmaterial enthält,
wobei das Grundgewebe zum Einbringen des Polgarns mit einer Vorbeschichtung auf der Rückflächenseite versehen ist, und die Vorbeschichtung ein organisches dämpfendes Füllmaterial enthält,
wobei das Polgarn metallbeschichtete leitende Fasern enthält, und wobei das organische dämpfende Füllmaterial eine oder mehrere Verbindungen enthält, ausgewählt aus p-(p-Toluolsulfonylamid)diphenylamin, 4,4'-bis(α, α-Dimethylbenzyl)diphenylamin, octyliertem Diphenylamin, 2,2'-Methylen-bis(4-ethyl-6-tertbutylphenol) und 4,4'-Thiobis(3-methyl-6-tertbutylphenol).

## Revendications

1. Tapis doté d'une couche de support formée sur le côté arrière de la surface d'une couche de surface en fibres, où la couche de surface en fibres comprend un tissu de base formé par du fil pour tapis à poil coupé et un fil pour tapis à poil coupé enfoncé dans le tissu de base, et au moins un élément parmi le tissu de base et le fil pour tapis à poil coupé contient un agent de remplissage organique atténuant,
dans lequel le tissu de base formé par le fil pour tapis à poil coupé est fourni avec un pré-revêtement sur le côté arrière de la surface, et le pré-revêtement contient un agent de remplissage organique atténuant,
dans lequel le fil pour tapis à poil coupé contient des fibres conductrices métallisées, et dans lequel l'agent de remplissage organique atténuant comprend un ou plusieurs composés choisis parmi
la p-(p-toluène sulfonylamide) diphénylamine, la 4,4'-bis(α, α-diméthylbenzyl) diphénylamine, la diphénylamine octylée,
le 2,2'-méthylène bis (4-éthyl-6-tert-butylphénol) et
le 4,4'-thiobis (3-méthyl-6-tert-butylphénol).
